# EUROPÄISCHE PATENTSCHRIFT

(11) **EP 4 103 428 B1**
(45) Veröffentlichungstag und Bekanntmachung des Hinweises auf die Patenterteilung: **15.11.2023**
(21) Anmeldenummer: 21703893.4
(22) Anmeldetag: 05.02.2021
(51) Int. Cl.: B60N 2/02, B60N 2/06, B60N 2/075

(54) **SITZLÄNGSVERSTELLER FÜR EINEN SITZ, INSBESONDERE FAHRZEUGSITZ, SOWIE FAHRZEUGSITZ**
SEAT FORE-AND-AFT ADJUSTER FOR A SEAT, PARTICULARLY A VEHICLE SEAT AND VEHICLE SEAT
DISPOSITIF DE RÉGLAGE AVANT-ARRIÈRE DE SIÈGE POUR UN SIÈGE, EN PARTICULIER POUR UN SIÈGE DE VÉHICULE ET SIÈGE DE VÉHICULE

(30) Priorität: 10.02.2020 DE 102020201620; 13.05.2020 DE 102020112907
(43) Veröffentlichungstag der Anmeldung: 21.12.2022
(73) Patentinhaber: Adient US LLC, Plymouth, MI 48170 (US)
(72) Erfinder: SPRENGER, Erik, 42929 Wermelskirchen (DE); SULAK, Andrej, 95652 Podluzany (SK)
(74) Vertreter: Liedtke & Partner Patentanwälte
(86) Internationale Anmeldenummer: PCT/EP2021/052755
(87) Internationale Veröffentlichungsnummer: WO 2021/160528

(56) Entgegenhaltungen:
- WO-A1-2010/039968
- DE-A1-102014 211 749
- US-A1- 2008 197 654
- US-A1- 2015 090 856

## Beschreibung

Die Erfindung betrifft einen Sitzlängsversteller für einen Sitz, insbesondere einen Fahrzeugsitz. Die Erfindung betrifft ferner einen Fahrzeugsitz.

### Stand der Technik

Aus dem Stand der Technik sind Sitzlängsversteller bekannt, bei welchen ein Getriebe in einem Getriebegehäuse angeordnet ist und mit einer Sitzschiene des Sitzlängsverstellers gekoppelt ist.

Aus dem Stand der Technik sind Querträger bekannt, die zwischen Schienenpaaren von Sitzlängsverstellern angeordnet sind.

Des Weiteren sind aus dem Stand der Technik Abdeckungen für Schienen, wie Endkappen, und Abdeckungen für Getriebeeinheiten von längsverschiebbaren Fahrzeugsitzen bekannt. Die Abdeckungen verhindern ein Eindringen von Fremdkörpern in die Schienen und stellen ein Abdecken scharfer Kanten der Schienen sicher. Bekannte Abdeckungen für Getriebeeinheiten sind im Stand der Technik an einem Querträger befestigt und an einer Oberschiene eines Schienenpaares verschraubt, siehe zum Beispiel US 2015/0090856 A1, US 2008/0197654 A1, DE 10 2014 211 749 A1 und WO 2010/039968 A1.

Die FR 2 928 880 A1 offenbart eine Einsteilvorrichtung für einen Fahrzeugsitz, mit einer ersten einstellbaren Baugruppe, einer zweiten einstellbaren Baugruppe, und mit einem Elektromotor, wobei der Elektromotor mittels zweier Ausgangswellen sowohl mit einem Einstellgetriebe der ersten einstellbaren Baugruppe als auch mit einem Einstellgetriebe der zweiten einstellbaren Baugruppe wirkverbunden ist, wobei ein Motorträger vorgesehen ist, der den Elektromotor aufnimmt. Der Motorträger ist einteilig aus Kunststoff hergestellt und weist an seinen beiden Enden jeweils einen einteilig in den Motorträger integrierten Adapter zur Befestigung des Motorträgers an den beiden einstellbaren Baugruppen auf. Eine ähnliche Einstellvorrichtung für einen Fahrzeugsitz ist aus der FR 3 001 667 A1 bekannt.

### Aufgabe

Aufgabe der vorliegenden Erfindung ist es, einen gegenüber dem Stand der Technik verbesserten Sitzlängsversteller anzugeben, sowie einen Fahrzeugsitz mit einem verbesserten Sitzlängsversteller bereitzustellen.

### Lösung

Die Aufgabe wird erfindungsgemäß gelöst, durch einen Sitzlängsversteller mit den Merkmalen des Anspruchs 1.

Die mit der Erfindung erzielten Vorteile bestehen insbesondere darin, dass durch den Abdeckungsbereich die Getriebeeinheit in einfacher und schneller Weise abgedeckt wird, wobei mittels der formschlüssigen und/oder kraftschlüssigen Verbindung des Abdeckungsbereichs mit der Getriebeeinheit eine Verwendung zusätzlicher separater Verbindungselemente, wie Schrauben, Nieten oder Bolzen, und Schweißverbindung oder Lötverbindungen vermieden ist. Die Abdeckung ist weitestgehend kostengünstig herstellbar. Des Weiteren bietet die Abdeckung eine gewichtssparende Lösung, wobei beispielsweise ein Schienenpaar, insbesondere eine Oberschiene, nicht mit weiteren Gewichten von Verbindungselementen belastet wird. Insbesondere sind die Getriebeeinheit und die Halterung und/oder zumindest ein Befestigungsbereich, insbesondere Verbindungsbereich, der Halterung an der Oberschiene vor äußeren Einflüssen, wie Schmutz, Staub oder Wasser, die die Getriebeeinheit und den Befestigungsbereich schädigen können, geschützt.

Des Weiteren ist eine Position des Abdeckelements an der Getriebeeinheit bzw. an dem Getriebegehäuse in einfacher und effektiver Weise gesichert. Das Abdeckelement ist vorzugsweise direkt an dem Gehäuseabschnitt fixiert. Beispielsweise ist das Abdeckelement durch das Getriebegehäuse zu der Oberschiene beabstandet angeordnet. Zusätzliche Fixierungselemente, wie Schrauben, sind nicht notwendig, um das Abdeckelement an der Oberschiene im Bereich der Getriebeeinheit zu fixieren. Darüber hinaus ist mittels des Abdeckelements sowohl das Getriebegehäuse als auch die Durchgangsöffnung und somit ein darunter liegender Schieneninnenraum abgedeckt und geschützt.

In einer möglichen Ausführungsform deckt der Abdeckungsteilbereich beispielsweise zumindest ein Verbindungselement der Halterung zur Befestigung der Halterung an der Oberschiene ab. Das Verbindungselement ist beispielsweise ein Fixierungselement, wie ein Schraubelement, Nietelement oder Schweißelement oder Lötelement. An einer Oberseite der Oberschiene ist vorzugsweise ein Kopf des Verbindungselements angeordnet. Mittels des Abdeckungsteilbereichs des Abdeckelements ist ein solch angeordneter Verbindungskopf abgedeckt und vor äußeren Einflüssen geschützt. Der Abdeckungsteilbereich und der Abdeckungsbereich können sich überlappende Bereiche umfassen. Das Abdeckelement ist also ausgebildet, sowohl das Getriebegehäuse als auch die Halterung abzudecken, ohne Verwendung einer separaten zusätzlichen Abdeckung und ohne zusätzliche Fixierungselemente.

In einer möglichen Ausführungsform umfasst das Abdeckelement zumindest einen Abdeckflügel, welcher seitlich vom Abdeckungsbereich absteht und zumindest einen Verbindungsbereich der Halterung mit der Oberschiene abdeckt. Der Abdeckflügel definiert beispielsweise den Abdeckungsteilbereich. Der Abdeckflügel ist derart an dem Abdeckungsbereich angeordnet, dass der Abdeckflügel im montierten Zustand des Abdeckelements an der Getriebeeinheit zu der Oberseite der Oberschiene beabstandet angeordnet ist. Der Abdeckungsteilbereich ist daher im Wesentlichen unterhalb des Abdeckflügels gebildet. Der Abdeckflügel ist beispielsweise in Form eines Schirmelements ausgebildet. Das Abdeckelement ist nur über den Abdeckungsbereich mit der Getriebeeinheit verbunden und somit an der oberen Schiene befestigt. Der Abdeckflügel muss nicht zusätzlich an der oberen Schiene fixiert werden.

An jeder lateralen Seite des Abdeckungsbereichs kann ein Abdeckflügel und ein Abdeckungsteilbereich vorgesehen sein. Beispielsweise ist die Halterung eine Sattelhalterung. Beispielsweise ist die Halterung im Wesentlichen U-förmig oder C-förmig ausgebildet, wobei ein offener Bereich nach oben, das heißt in Richtung der Oberschiene, gerichtet ist. Halteschenkel der Halterung umschließen das Getriebegehäuse, wobei offene Enden der Halteschenkel jeweils an der Oberschiene befestigt sind. Beispielsweise sind die Halteschenkel mittels Fixierungselementen, wie Schrauben, und/oder integrierten Verbindungselementen an der Oberschiene befestigt, wobei die Fixierungselemente und/oder Verbindungselemente durch eine Oberseite der Oberschiene hindurchgeführt sind. Ein Kopf des jeweiligen Fixierungselements und/oder Verbindungselements ist dabei an der Oberseite angeordnet und muss vor äußeren Einflüssen zur Sicherung einer Fixierungskraft geschützt werden. Die Abdeckflügel sind oberhalb dieser Fixierungselemente und/oder Verbindungselemente angeordnet und schließen die Fixierungselemente und/oder Verbindungselemente in ihren Abdeckungsteilbereichen ein.

In einer möglichen Ausführungsform umfasst das Abdeckelement zumindest einen Abdecksteg und zwei vom Abdecksteg abstehende und sich parallel gegenüberliegende Abdeckschenkel, wobei ein zwischen den Abdeckschenkeln vorhandener Freiraum den zumindest einen Abdeckungsbereich bildet. Der Abdecksteg und die Abdeckschenkel bilden beispielsweise einen Grundkörper, insbesondere einen Abdeckungsabschnitt, des Abdeckelements. Der Grundkörper bzw. Abdeckungsabschnitt ist beispielsweise im Wesentlichen U-förmig oder C-förmig ausgebildet. Ein offenes Ende ist dabei nach unten, das heißt in Richtung der Oberschiene gerichtet. Ein Abdeckflügel steht von einem der Abdeckschenkel ab. Beispielsweise steht der Abdeckflügel von dem Abdeckschenkel im Wesentlichen senkrecht oder in einem vorgegebenen Winkel ab. Der Abdeckflügel ist im Wesentlichen L-förmig oder J-förmig ausgebildet, wobei ein Ende des Abdeckflügels mit dem Abdeckschenkel verbunden ist. In einer Weiterbildung ist das Abdeckelement einteilig ausgebildet. Beispielsweise sind Abdeckschenkel und Abdeckflügel einteilig ausgebildet.

In einer möglichen Ausführungsform weist der Abdeckungsbereich zumindest eine mit einer Form des Gehäuseabschnitts der Getriebeeinheit korrespondierende Form auf.

In einer möglichen Ausführungsform ist das Abdeckelement im Wesentlichen omegaförmig ausgebildet. Beispielsweise weist der Abdeckungsbereich eine Omegaform auf, wobei der Gehäuseabschnitt im offenen Aufnahmebereich der Omegaform angeordnet ist.

In einer möglichen Ausführungsform umfasst der jeweilige Abdeckschenkel zumindest eine nach innen in den Abdeckungsbereich gerichtete Wölbung zu der kraftschlüssigen und/oder formschlüssigen Verbindung mit dem Gehäuseabschnitt. Der Gehäuseabschnitt weist dabei eine mit der jeweiligen Wölbung korrespondierende Form, insbesondere Ausnehmung, auf.

In einer möglichen Ausführungsform ist die Halterung mit dem Getriebegehäuse in einem durch das Schienenpaar gebildeten Innenraum angeordnet und an dessen Oberschiene befestigt.

In einer möglichen Ausführungsform umfasst die Halterung zumindest ein Verbindungselement, welches durch eine in der Oberschiene gebildete Durchgangsöffnung hinausragt und die Halterung an der Oberschiene befestigt. Die Halterung umfasst beispielsweise einen Haltesteg und zumindest zwei vom Haltesteg abstehende und sich parallel gegenüberliegende Halteschenkel. Ein zwischen den Halteschenkeln vorhandener Freiraum bildet einen Aufnahmebereich, beispielsweise in Form einer Aufnahmewanne, zu der Aufnahme der Getriebeeinheit, wobei die Halteschenkel jeweils an einem ihrer Enden ein plastisch verformbares Verbindungselement aufweisen, die im montierten Zustand an der Oberschiene des Sitzlängsverstellers derart plastisch verformt sind, dass die Verbindungselemente mit einer Oberseite der Oberschiene formschlüssig und/oder kraftschlüssig verbunden sind.

In einer möglichen Ausführungsform ist das Abdeckelement mit einem Querträger zur Halterung der Antriebseinheit an dem Schienenpaar verbunden. Beispielsweise umfasst der Sitzlängsversteller zwei Schienenpaare, welche über den Querträger miteinander verbunden sind. Der Querträger ist eine Motorhalterung. Dadurch sind Verschiebebewegungen der Oberschienen zueinander synchronisiert. Ein Trägerkörper des Querträgers weist zwei Enden auf, wobei jeweils ein Ende mit einem Schienenpaar des Sitzlängsverstellers gekoppelt ist. Zumindest an einem dieser Enden ist das Abdeckelement angeordnet und mit einer Getriebeeinheit eines der Schienenpaare formschlüssig und/oder kraftschlüssig verbunden. Zum Beispiel ist das Abdeckelement an dem einen Ende des Trägerkörpers fixiert, beispielsweise geschweißt, geklebt oder verlötet.

Der Trägerkörper und das Abdeckelement können als ein einteiliges Trägerelement ausgebildet sein. Somit können zusätzliche separate Fixierungselemente, wie Schrauben, zur Fixierung des Querträgers an dem einen Schienenpaar oder an beiden Schienenpaaren vermieden werden. Der Trägerkörper und das Abdeckelement müssen nicht in einem zusätzlichen Montageschritt miteinander verbunden werden, sondern werden bereits einteilig hergestellt. Herkömmliche Querträger werden an der Oberschiene verschraubt. Das Abdeckelement ermöglicht eine Querträgeranbindung ohne weitere Fixierungselemente, wie Schrauben, wobei insbesondere der Sitzlängsversteller bauteilreduziert und gewichtsreduziert und somit kostenreduziert ausgestaltet ist. Über das Abdeckelement ist der Querträger jeweils an der Getriebeeinheit lösbar, insbesondere kraftschlüssig und/oder formschlüssig, fixiert. Der Abdeckungsbereich ist auf den Gehäuseabschnitt der Getriebeeinheit aufgeschoben oder aufgesteckt bzw. der Gehäuseabschnitt der Getriebeeinheit ist in den Abdeckungsbereich eingesteckt. Durch die Abdeckflügel an den Abdeckschenkeln ist eine zusätzliche Abdeckung für die Verbindungsbereiche der Halterung an der Oberschiene ausgebildet.

Die Abdeckung kann zumindest ein Abdeckelement mit einem Querträgerverbindungsabschnitt und einem Abdeckungsabschnitt umfassen. Der Abdeckungsabschnitt kann zumindest zwei sich parallel gegenüberliegende Abdeckschenkel umfassen, wobei ein zwischen den Abdeckschenkeln vorhandener Freiraum einen Abdeckungsbereich, insbesondere einen Abdeckungsbereich und Aufnahmebereich, bildet. Der Abdeckungsabschnitt kann im Wesentlichen U-förmig oder C-förmig ausgebildet sein. Der Abdeckungsabschnitt kann einen nach unten offenen Abdeckungsbereich, beispielsweise in Form einer Aufnahmewanne, aufweisen. Der Abdeckungsabschnitt kann ausgebildet sein, eine Getriebeeinheit des Sitzlängsverstellers vollständig abzudecken und/oder zumindest teilweise aufzunehmen. Des Weiteren kann der Abdeckungsbereich ausgebildet sein, formschlüssig und/oder kraftschlüssig an der Getriebeeinheit fixierbar zu sein.

In einer Ausführungsform ist der Abdeckungsabschnitt im Querschnitt insbesondere im Wesentlichen omegaförmig (*Ω* - *förmig*) ausgebildet. Ein ausgewölbter Bereich, insbesondere ein mittlerer Bereich, des Abdeckungsabschnitts ist ausgebildet, die Getriebeeinheit zumindest teilweise aufzunehmen. Zum Beispiel ist die Getriebeeinheit mittels eines Formschlusses und/oder Kraftschlusses in dem Abdeckungsabschnitt zumindest gegenüber einer Längsverschiebung fixiert.

In einer Weiterbildung umfasst der Abdeckungsabschnitt Abdeckflügel, beispielsweise Abdecklaschen oder Abdeckklappen. Die Abdeckschenkel weisen senkrecht von diesen abstehende Abdeckflügel auf, wobei die Abdeckflügel ausgebildet sind, eine Befestigungsvorrichtung der Getriebeeinheit abzudecken. Die Abdeckflügel sind im Wesentlichen L-förmig oder J-förmig ausgebildet und bilden gemeinsam mit den Abdeckschenkeln den nach unten offenen Abdeckungsbereich. Beispielsweise ist die Getriebeeinheit mittels einer Befestigungsvorrichtung, insbesondere in Form eines U-förmigen oder C-förmigen Haltesattels, an einer Oberschiene des Sitzlängsverstellers befestigt. Die Befestigungsvorrichtung umfasst eine Halterung mit zumindest zwei sich parallel gegenüberliegenden Halteschenkeln. Ein zwischen den Halteschenkeln vorhandener Freiraum bildet einen Aufnahmebereich, beispielsweise in Form einer Aufnahmewanne, zur Aufnahme der Getriebeeinheit, wobei die Halteschenkel jeweils an einem ihrer Enden ein plastisch verformbares Verbindungselement aufweisen, die im montierten Zustand an der Oberschiene des Sitzlängsverstellers derart plastisch verformt sind, dass die Verbindungselemente mit einer Oberseite der Oberschiene formschlüssig und/oder kraftschlüssig verbunden sind. In einer alternativen Variante sind die Halteschenkel an einem ihrer Enden mit der Oberseite der Oberschiene verschraubt oder verschweißt. Mittels der Abdeckflügel sind die an der Oberseite der Oberschiene angeordneten Verbindungen in einfacher und schneller Weise abdeckbar.

Beispielsweise sind die Abdeckschenkel und die Abdeckflügel einteilig ausgebildet. Beispielsweise sind der Abdeckungsabschnitt und der Querträgerverbindungsabschnitt einteilig ausgebildet. Die Abdeckung ist beispielsweise aus Metall und/oder Kunststoff gebildet. Zum Beispiel ist die Abdeckung ein Spritzgussteil.

Der Querträger kann zumindest einen Trägerkörper und eine an dem Trägerkörper angeordnete Abdeckung umfassen. Der Trägerkörper weist zwei Enden auf, wobei jeweils ein Ende mit einem Schienenpaar des Sitzlängsverstellers gekoppelt ist. Zumindest an einem dieser Enden ist die Abdeckung angeordnet und mit einer Getriebeeinheit des Schienenpaares formschlüssig und/oder kraftschlüssig verbunden. Zum Beispiel ist die Abdeckung an dem einen Ende des Trägerkörpers fixiert, beispielsweise geschweißt, geklebt oderverlötet. Insbesondere sind der Trägerkörper und die Abdeckung als einteiliges Trägerelement ausgebildet. Beispielsweise ist der Trägerkörper aus Metall und/oder Kunststoff gebildet. Zum Beispiel können der Trägerkörper und die Abdeckung in einem Gussverfahren hergestellt werden.

Der Sitzlängsversteller kann zwei Schienenpaare und zumindest einen die beiden Schienenpaare miteinander verbindenden Querträger umfassen. Die Schienenpaare verlaufen parallel zueinander und sind voneinander beabstandet unterhalb des Fahrzeugsitzes angeordnet. Der Querträger ist vorgesehen, die Schienenpaare miteinander bewegungsgekoppelt zu verbinden.

Des Weiteren wird die Aufgabe gelöst, durch einen Fahrzeugsitz aufweisend einen zuvor beschriebenen Sitzlängsversteller.

### Figuren und Ausführungsformen der Erfindung

Ein Ausführungsbeispiel der Erfindung ist nachfolgend anhand von Zeichnungen näher erläutert. Dabei zeigen:
- Figur 1: schematisch in Seitenansicht einen Fahrzeugsitz mit einem Sitzlängsversteller,
- Figur 2: schematisch in Draufsicht einen Sitzlängsversteller mit zwei Schienenpaaren,
- Figur 3: schematisch in perspektivischer Ansicht eine Oberschiene eines Schienenpaares mit einer an dieser befestigten Getriebeeinheit,
- Figur 4A: ausschnittsweise eine perspektivische Ansicht der Oberschiene, der Getriebeeinheit, und einer Abdeckung eines die Schienenpaare miteinander verbindenden Querträgers, wobei die Abdeckung dazu vorgesehen ist, eine an einer Oberschiene befestigte Getriebeeinheit abzudecken, und
- Figur 4B: eine Fig. 4A entsprechende Seitenansicht.

Einander entsprechende Teile sind in allen Figuren mit den gleichen Bezugszeichen versehen.

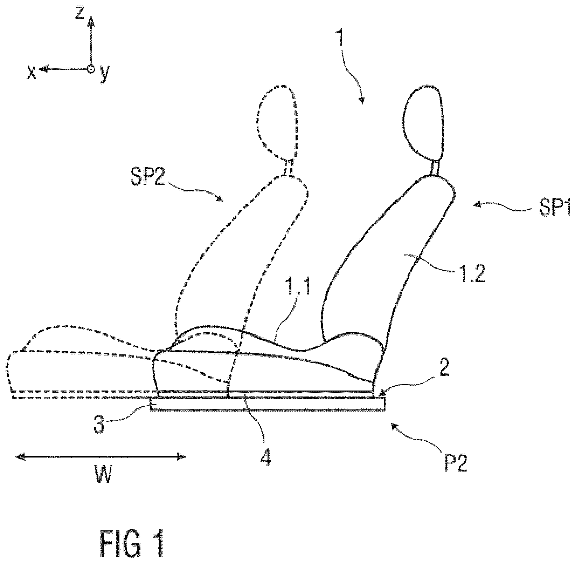

Figur 1 zeigt schematisch in Seitenansicht einen Fahrzeugsitz 1 mit einem Sitzlängsversteller 2.

Eine Anordnung des Fahrzeugsitzes 1 im Fahrzeug wird anhand des nachfolgend verwendeten Koordinatensystems definiert, umfassend eine einer Hochrichtung des Fahrzeugs zugeordneten Hochachse z, eine einer Längsrichtung des Fahrzeugs zugeordneten Längsachse x und eine einer Querrichtung des Fahrzeugs zugeordneten Querachse y.

Die verwendeten Positionsangaben und Richtungsangaben, wie beispielsweise vorne, hinten, oben und unten sowie oberhalb und unterhalb beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Rückenlehne 1.2 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Der Fahrzeugsitz 1 umfasst zumindest eine Sitzfläche 1.1 und eine Rückenlehne 1.2. Die Rückenlehne 1.2 ist beispielsweise mit der Sitzfläche 1.1 verbunden und/oder gegenüber der Sitzfläche 1.1 beweglich angeordnet. Der Fahrzeugsitz 1 umfasst beispielsweise eine Funktion mit der die Sitzfläche 1.1 und die Rückenlehne 1.2 zusammen entlang eines Verstellweges W zwischen zumindest zwei Positionen SP1 und SP2 verschiebbar sind. Des Weiteren ist der Fahrzeugsitz 1 in jeder beliebigen Position entlang des Verstellweges W verriegelbar.

Zur Längsverstellung des Fahrzeugsitzes 1 umfasst dieser zumindest einen Sitzlängsversteller 2. Die Position SP1 ist beispielsweise eine Gebrauchsposition und Komfortposition des Fahrzeugsitzes 1. Die Position SP2 ist beispielsweise eine Einstiegsposition des Fahrzeugsitzes 1, wobei ein Zugang zu einem hinter dem Fahrzeugsitz 1 ausgebildeten Bereich vergrößert ist.

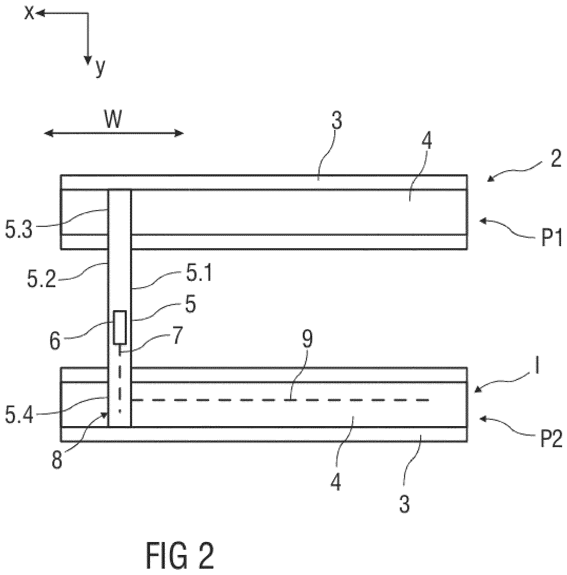

Der Sitzlängsversteller 2 umfasst beispielsweise zwei Schienenpaare P1 und P2, wie in Figur 2 näher gezeigt, wobei in Figur 1 nur eines der Schienenpaare P1, P2 dargestellt ist. Das jeweilige Schienenpaar P1, P2 umfasst eine Unterschiene 3 und eine in Längsrichtung beweglich an der Unterschiene 3 angeordnete Oberschiene 4.

Figur 2 zeigt schematisch in Draufsicht einen Sitzlängsversteller 2 mit zwei Schienenpaaren P1 und P2. Das jeweilige Schienenpaar P1, P2 umfasst eine Unterschiene 3 und eine in Längsrichtung beweglich an der Unterschiene 3 angeordnete Oberschiene 4.

Die Unterschiene 3 ist dabei fahrzeugfest an einer Fahrzeugstruktur, beispielsweise an einem Fahrzeugboden, angeordnet. Die Oberschiene 4 ist an der Sitzfläche 1.1, insbesondere unterhalb der Sitzfläche 1.1, angeordnet und insbesondere mittels einer Sitzteilstruktur mit dieser fest verbunden.

Vorzugsweise sind die Schienenpaare P1 und P2 auf jeder Seite der Sitzfläche 1.1, beispielsweise in Querrichtung nebeneinander, angeordnet und jeweils mit dieser verbunden. Die Schienenpaare P1 und P2 sind über einen Querträger 5, beispielsweise in Form einer Querverbindungsstange und/oder einer Motorbrücke, miteinander gekoppelt. Der Querträger 5 ist vorgesehen, eine gleichmäßige Längsverstellung des Fahrzeugsitzes 1 auszuführen, wenn mindestens eines der Schienenpaare P1, P2 zur Längsverstellung betätigt wird.

Darüber hinaus weist der Querträger 5 eine Aufnahme 5.1 auf, in welcher zumindest eine Antriebseinheit 6, beispielsweise in Form eines Motors, und eine mit der Antriebseinheit 6 gekoppelte Antriebswelle 7 angeordnet sind. Zum Beispiel umfasst der Querträger 5 einen Trägerkörper 5.2, welcher die Aufnahme 5.1 umfasst. Insbesondere ist der Querträger 5 mit der jeweiligen Oberschiene 4 verbunden. Der Querträger 5 ist vorgesehen, die Schienenpaare P1, P2 aneinander bewegungsgekoppelt zu halten. Zum Beispiel weist der Trägerkörper 5.2 zwei Enden 5.3, 5.4 auf, wobei jeweils ein Ende 5.3, 5.4 mit einer jeweiligen Oberschiene 4 verbunden ist.

Wenn die Antriebseinheit 6 betrieben wird, wird die Antriebswelle 7 gedreht und eine Längsverstellung des Fahrzeugsitzes 1 betätigt. Zum Beispiel ist die Antriebswelle 7 zumindest mit einer am Schienenpaar P1 und/oder P2 angeordneten Getriebeeinheit 8 gekoppelt. Die Getriebeeinheit 8 ist an der Oberschiene 4 befestigt. Beispielsweise umfasst der Querträger 5 eine zumindest an einem seiner Enden 5.3, 5.4 angeordnete Schnittstelle zu der Getriebeeinheit 8, um beispielsweise Kabelverbindungen und die Antriebswelle 7 relativ zu der Getriebeeinheit 8 auszurichten.

Des Weiteren ist die Getriebeeinheit 8 mit einer Gewindespindel 9 gekoppelt. Die Getriebeeinheit 8 ist ausgebildet, eine Drehbewegung der Antriebswelle 7auf die Gewindespindel 9 zu übertragen, wodurch die Oberschiene 4 relativ zu der Unterschiene 3 bewegt wird. Hierfür ist die Gewindespindel 9 in einem zwischen der Unterschiene 3 und der Oberschiene 4 gebildeten Innenraum I angeordnet und rotationsbeweglich an der Oberschiene 4 gehalten. Die Unterschiene 3 und die Oberschiene 4 umgreifen sich dabei gegenseitig mit ihren im Wesentlichen U-förmigen Profilen mit nach innen bzw. nach außen gebogenen Randbereichen.

Zum Beispiel ist die Gewindespindel 9 an einem ihrer Enden mit der Getriebeeinheit 8 gekoppelt und am anderen Ende beispielsweise mittels einer nicht näher dargestellten Haltevorrichtung, beispielsweise in Form eines Flansches, drehbeweglich an der Oberschiene 4 befestigt.

Auf die Gewindespindel 9 ist eine nicht näher dargestellte Spindelmutter, beispielsweise in Form eines Blocks oder einer Buchse, durch welche die Gewindespindel 9 hindurchgeführt ist und mit welcher die Gewindespindel 9 im Eingriff ist, aufgeschraubt. Die Spindelmutter ist fest an der Unterschiene 3 gehalten. Bei Rotation der Gewindespindel 9 schraubt sich diese durch die Spindelmutter und bewegt sich dadurch relativ zu der Unterschiene 3. Bei der Längsverstellung des Fahrzeugsitzes 1 wird die Oberschiene 4 relativ zu der Unterschiene 3 bewegt.

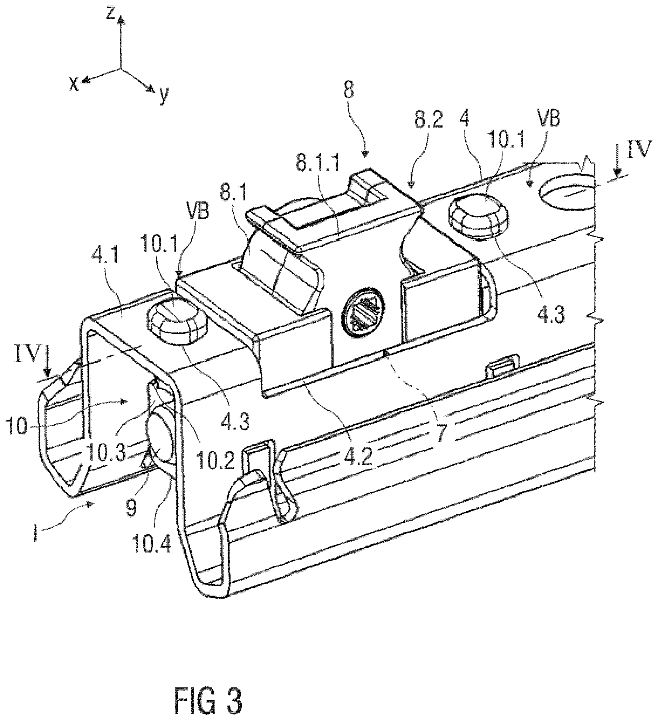

Figur 3 zeigt schematisch in perspektivischer Ansicht eine Oberschiene 4 eines Schienenpaares P2 mit einer an dieser befestigten Getriebeeinheit 8.

Die Getriebeeinheit 8 umfasst ein Getriebegehäuse 8.1 und einen in dem Getriebegehäuse 8.1 angeordneten Getriebemechanismus 8.2 zum Antrieb der Gewindespindel 9 und somit zur Längsverstellung des Fahrzeugsitzes 1. Beispielsweise umfasst der Getriebemechanismus 8.2 eine Anzahl von miteinander bewegungsgekoppelten Getriebeelementen, wobei der Getriebemechanismus 8.2 mit der Antriebseinheit 6 über die Antriebswelle 7 verbunden ist. Der Getriebemechanismus 8.2 ist durch eine Anzahl oder Mehrzahl von Getriebeelementen gebildet. Die Getriebeelemente umfassen beispielsweise ein Schneckenrad, Lagerscheiben etc.

Die Getriebeeinheit 8, insbesondere das Getriebegehäuse 8.1, ist dabei an der Oberschiene 4 befestigt. Zur Befestigung der Getriebeeinheit 8 an der Oberschiene 4 ist eine Befestigungsvorrichtung 10 vorgesehen. Die Befestigungsvorrichtung 10 ist wie die Getriebeeinheit 8 in dem Innenraum I des Schienenpaares P2 angeordnet. Insbesondere ist die Getriebeeinheit 8 an einer Oberseite 4.1 der im Wesentlichen nach unten offenen U-förmigen Oberschiene 4 mittels der Befestigungsvorrichtung 10 befestigt. Die Befestigungsvorrichtung 10 ist im Wesentlichen U-förmig ausgebildet. Die Befestigungsvorrichtung 10 umfasst eine im Wesentlichen U-förmige oder C-förmige Halterung 10.2. Die Halterung 10.2 weist zwei sich parallel gegenüberliegende Halteschenkel 10.3 auf. Die Halteschenkel 10.3 bilden gemeinsam mit einem Haltesteg 10.4 eine Aufnahmewanne zur Aufnahme des Getriebegehäuses 8.1. Die Halteschenkel 10.3 sind jeweils an offenen Enden mit der Oberschiene 4 verbunden, beispielsweise mittels separaten Fixierungselementen, wie Schrauben. Beispielsweise weisen die Halteschenkel 10.3 jeweils an ihrem offenen Ende ein plastisch verformbares Verbindungselement 10.1 zur Verbindung, insbesondere Fixierung, der Halterung 10.2 an der Oberschiene 4, insbesondere an der Oberseite 4.1. auf. Die Verbindungselemente 10.1 sind im montierten Zustand durch die Durchgangsöffnungen 4.3 hindurchgeführt und an der Oberseite 4.1 plastisch verformt. Beispielsweise sind die Verbindungselemente 10.1 Nietelemente. Alternativ sind an der Oberseite 4.1 separate Fixierungselemente angeordnet, welche durch die Durchgangsöffnungen 4.3 die Halteschenkel 10.3 an der Oberseite 4.1 fixieren.

Die Oberschiene 4 umfasst, insbesondere an der Oberseite 4.1, eine Durchgangsöffnung 4.2, durch welche das in der Befestigungsvorrichtung 10 getragene Getriebegehäuse 8.1 zur Ankopplung der Antriebswelle 7 teilweise hindurchgeführt ist. Dabei umfasst das Getriebegehäuse 8.1 einen Gehäuseabschnitt 8.1.1, welcher durch die Durchgangsöffnung 4.2 nach oben ragt. Der Gehäuseabschnitt 8.1.1 umschließt beispielsweise ein Teil des Getriebemechanismus 8.2, welcher mit der Antriebswelle 7 gekoppelt wird oder ist. Zum Beispiel ist im Bereich des Gehäuseabschnitts 8.1.1 ein Schneckenrad angeordnet und muss zur Verbindung mit der Antriebswelle 7 in der Oberschiene 4 zumindest teilweise freigelegt sein. Des Weiteren umfasst die Oberschiene 4, insbesondere die Oberseite 4.1, zwei weitere Durchgangsöffnungen 4.3, durch welche jeweils Verbindungselemente 10.1 der Befestigungsvorrichtung 10 nach oben hindurchgeführt und an der Oberseite 4.1 der Oberschiene 4 arretiert, insbesondere vernietet sind. Beispielsweise sind die Verbindungselemente 10.1, wie Nietelemente, korrosionsanfällig und müssen vor äußeren Einflüssen geschützt werden.

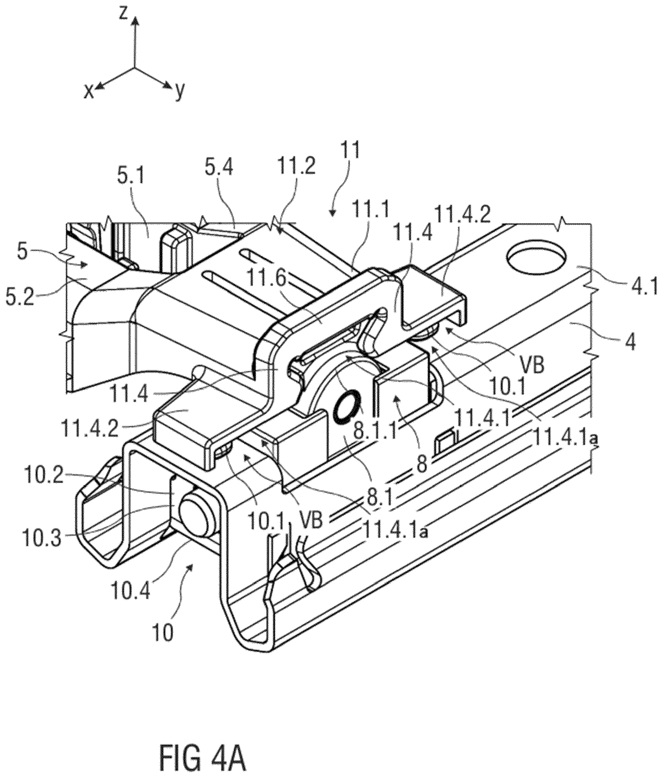

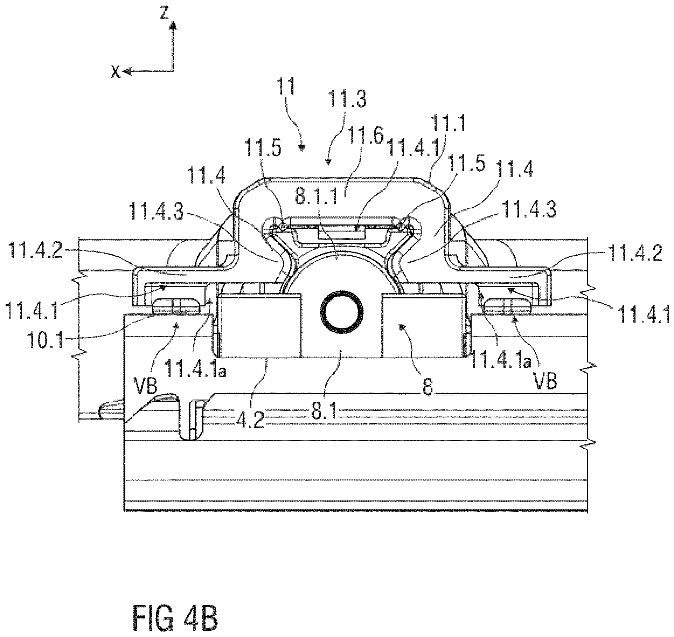

Um die Getriebeeinheit 8 und Befestigungsbereiche, insbesondere Verbindungsbereiche VB, der Befestigungsvorrichtung 10, insbesondere der Halterung 10.2, vor äußeren Einflüssen zu schützen, ist eine in den Figuren 4A und 4B gezeigte Abdeckung 11 im Bereich der Getriebeeinheit 8 vorgesehen. Insbesondere deckt die Abdeckung 11 die Durchgangsöffnungen 4.2 und 4.3 ab. Die Abdeckung 11 ist oberhalb der Oberseite 4.1 der Oberschiene 4 angeordnet. Insbesondere ist die Abdeckung 11 ein integrierter Bestandteil des Querträgers 5.

Figuren 4A und 4B zeigen schematisch in einer perspektivischen Ansicht und einer Seitenansicht den Querträger 5 mit der Abdeckung 11, wobei die Abdeckung 11 vorgesehen ist, die an der Oberschiene 4 befestigten Getriebeeinheit 8 und die Befestigungsvorrichtung 10, welche die Getriebeeinheit 8 an der Oberschiene 4 fixiert, abzudecken. Des Weiteren ist die Abdeckung 11 vorgesehen, den Querträger 5 mit der Oberschiene 4 zu verbinden und zu dieser auszurichten. Im Stand der Technik wird der Querträger 5 an der Oberschiene 4 verschraubt. Die dargestellte Ausführungsform bietet eine einfache und teilereduzierte Variante zur Verbindung des Querträgers 5 und der Oberschiene 4, insbesondere im Bereich der Getriebeeinheit 8, sowie zu dem Schutz des Bereichs der Getriebeeinheit 8.

Der Querträger 5 ist als Querverbindungsstange und/oder Motorbrücke zwischen zwei Schienenpaaren P1 und P2 angeordnet und ausgebildet, beide Schienenpaare P1, P2 miteinander zu verbinden. Der Querträger 5 umfasst zumindest den Trägerkörper 5.2 und die an diesem angeordnete Abdeckung 11. Der Trägerkörper 5.2 weist zwei Enden 5.3, 5.4 (wobei nur ein Ende 5.4 gezeigt ist) auf, wobei jeweils ein Ende 5.3, 5.4 mit einem der Schienenpaare P1, P2 des Sitzlängsverstellers 2 gekoppelt ist. Zumindest an einem dieser Enden 5.4 ist die Abdeckung 11 angeordnet und mit der Getriebeeinheit 8 formschlüssig und/oder kraftschlüssig verbunden. Zum Beispiel ist die Abdeckung 11 an dem einen Ende 5.4 des Trägerkörpers 5.2 fixiert, beispielsweise geschweißt, geklebt oder verlötet. Alternativ sind der Trägerkörper 5.2 und die Abdeckung 11 als einteiliges Trägerelement ausgebildet. Beispielsweise ist der Trägerkörper 5.2 aus Metall und/oder Kunststoff gebildet.

Die Abdeckung 11 umfasst ein Abdeckelement 11.1 mit einem Querträgerverbindungsabschnitt 11.2 und einem Abdeckungsabschnitt 11.3. Der Abdeckungsabschnitt 11.3 umfasst zumindest zwei sich parallel gegenüberliegende Abdeckschenkel 11.4, wobei ein zwischen den Abdeckschenkeln 11.4 vorhandener Freiraum einen Abdeckungsbereich 11.4.1 bildet. Der Abdeckungsabschnitt 11.3 ist im Wesentlichen U-förmig oder C-förmig ausgebildet und weist den nach unten offenen Abdeckungsbereich 11.4.1, beispielsweise in Form einer Aufnahmewanne, auf. Der Abdeckungsabschnitt 11.3 ist ausgebildet, die Getriebeeinheit 8 vollständig abzudecken und/oder zumindest teilweise aufzunehmen. Des Weiteren ist der Abdeckungsbereich 11.4.1 ausgebildet, die Abdeckung 11 formschlüssig und/oder kraftschlüssig an der Getriebeeinheit 8 zu fixieren. Dabei formen die Abdeckschenkel 11.4 eine mit einer Form der Getriebeeinheit 8, insbesondere mit einer Form eines aus der Oberschiene 4 herausragenden Abschnitts der Getriebeeinheit 8, korrespondierende Form auf. Zum Beispiel ist der Abdeckungsbereich 11.4.1 seitlich auf die Getriebeeinheit 8 aufgeschoben und mit dieser verrastet. Zum Beispiel weist der Abdeckungsbereich 11.4.1 Rastelemente 11.5 auf, die den Abdeckungsabschnitt 11.3 in Querrichtung an der Getriebeeinheit 8 fixieren. Die Abdeckschenkel 11.4 sind jeweils an einem Ende über einen Abdecksteg 11.6 miteinander verbunden. Zum Beispiel sind die Rastelemente 11.5 im Bereich des Abdeckstegs 11.6 angeordnet.

Der Abdeckungsabschnitt 11.3 umfasst zwei Abdeckflügel 11.4.2, beispielsweise Abdecklaschen oder Abdeckklappen. Die Abdeckschenkel 11.4 weisen senkrecht und in Längsrichtung von diesen abstehende Abdeckflügel 11.4.2 auf, wobei die Abdeckflügel 11.4.2 ausgebildet sind, die Befestigungsvorrichtung 10, insbesondere die Verbindungselemente 10.1 und/oder die Verbindungsbereiche VB, der Getriebeeinheit 8 abzudecken. Die Abdeckflügel 11.4.2 sind im Wesentlichen L-förmig oder J-förmig ausgebildet. Die Abdeckschenkel 11.4 bilden den nach unten offenen Abdeckungsbereich 11.4.1. Mittels der Abdeckflügel 11.4.2 sind die an der Oberseite 4.1 der Oberschiene 4 angeordneten Verbindungen in einfacher Weise zusätzlich abdeckbar. Dadurch ist eine Integration der Abdeckung der Verbindungselemente 10.1 in den Querträger 5 geschaffen. Die Enden 5.3, 5.4 des Querträgers 5, insbesondere des Trägerkörpers 5.2 zur Anbindung an das jeweilige Schienenpaar P1, P2, sind also als integrierte Abdeckungen 11, insbesondere als Abdeckelemente 11.1, ausgebildet.

Die Abdeckflügel 11.4.2 bilden zu dem zentralen Abdeckungsbereich 11.4.1 lateral, d. h. seitlich, angeordnete Abdeckungsteilbereiche 11.4.1a, welche zumindest die Verbindungsbereiche VB der Halterung 10.2 an der Oberschiene 4 abdecken. Der jeweilige Abdeckungsteilbereich 11.4.1a deckt das Verbindungselement 10.1 der Halterung 10.2 an der Oberschiene 4 ab. Dabei stehen die Abdeckflügel 11.4.2 derart von den Abdeckschenkeln 11.4 ab, dass die Durchgangsöffnungen 4.2, 4.3 vollständig abgedeckt sind und somit der darunter liegende Innenraum I vor äußeren Einflüssen geschützt ist.

Die Getriebeeinheit 8, insbesondere das Getriebegehäuse 8.1, ist in dem Abdeckungsbereich 11.4.1 formschlüssig und/oder kraftschlüssig aufgenommen. Insbesondere weisen die Abdeckschenkel 11.4 nach innen in den Abdeckungsbereich 11.4.1, insbesondere in den Abdeckungsbereich 11.4.1 und den Aufnahmebereich, der Getriebeeinheit 8 ragende Wölbungen 11.4.3 auf. Die Wölbungen 11.4.3 drücken in Längsrichtung gegen die Getriebeeinheit 8, insbesondere gegen den aus der Oberschiene 4 ragenden Abschnitt zur formschlüssigen und/oder kraftschlüssigen Verbindung in Längsrichtung.

Die Abdeckschenkel 11.4 und die Abdeckflügel 11.4.2 sind vorzugsweise einteilig ausgebildet. Beispielsweise sind der Abdeckungsabschnitt 11.3 und der Querträgerverbindungsabschnitt 11.2 einteilig ausgebildet. Die Abdeckung 11 ist beispielsweise aus Metall und/oder Kunststoff gebildet. Vorzugsweise ist die Abdeckung 11 ein Spritzgussteil.

### Bezugszeichenliste

- 1: Fahrzeugsitz
- 1.1: Sitzfläche
- 1.2: Rückenlehne
- 2: Sitzlängsversteller
- 3: Unterschiene
- 4: Oberschiene
- 4.1: Oberseite
- 4.2, 4.3: Durchgangsöffnung
- 5: Querträger
- 5.1: Aufnahme
- 5.2: Trägerkörper
- 5.3, 5.4: Ende (des Querträgers 5)
- 6: Antriebseinheit
- 7: Antriebswelle
- 8: Getriebeeinheit
- 8.1: Getriebegehäuse
- 8.1.1: Gehäuseabschnitt
- 8.2: Getriebemechanismus
- 9: Gewindespindel
- 10: Befestigungsvorrichtung
- 10.1: Verbindungselement
- 10.2: Halterung
- 10.3: Halteschenkel
- 10.4: Haltesteg
- 11: Abdeckung
- 11.1: Abdeckelement
- 11.2: Querträgerverbindungsabschnitt
- 11.3: Abdeckungsabschnitt
- 11.4: Abdeckschenkel
- 11.4.1: Abdeckungsbereich
- 11.4.1a: Abdeckungsteilbereich
- 11.4.2: Abdeckflügel
- 11.4.3: Wölbung
- 11.5: Rastelement
- 11.6: Abdecksteg

- I: Innenraum
- P1, P2: Schienenpaar
- SP1, SP2: Position
- VB: Verbindungsbereich
- W: Verstellweg

- x: Längsachse
- y: Querachse
- z: Hochachse

## Patentansprüche

1. Sitzlängsversteller (2) für einen Sitz, insbesondere einen Fahrzeugsitz (1), umfassend zumindest
- ein Schienenpaar (P1, P2) mit einer Unterschiene (3) und einer verschiebbar an der Unterschiene (3) gelagerten Oberschiene (4),
- eine Antriebseinheit (6),
- eine Getriebeeinheit (8) mit einem Getriebegehäuse (8.1), wobei die Getriebeeinheit (8) und die Antriebseinheit (6) miteinander gekoppelt sind,
- eine Halterung (10.2) zur Befestigung des Getriebegehäuses (8.1) an der Oberschiene (4), und
- ein Abdeckelement (11.1),
wobei die Oberschiene (4) zumindest eine Durchgangsöffnung (4.2) aufweist, durch welche zumindest ein Gehäuseabschnitt (8.1.1) des Getriebegehäuses (8.1) hinausragt, und
das Abdeckelement (11.1) zur Abdeckung des Getriebegehäuses (8.1) zumindest einen Abdeckungsbereich (11.4.1) umfasst, welcher durch zwei sich parallel gegenüberliegende Abdeckschenkel (11.4) gebildet ist, und
das Abdeckelement (11.1) zumindest einen zu dem Abdeckungsbereich (11.4.1) lateral angeordneten Abdeckungsteilbereich (11.4.1a) umfasst,
wobei der Abdeckungsteilbereich (11.4.1a) mittels eines senkrecht in Längsrichtung von einem der Abdeckschenkel (11.4) abstehenden Abdeckflügel (11.4.2) definiert ist,
wobei der Abdeckungsbereich (11.4.1) mit dem Gehäuseabschnitt (8.1.1) kraftschlüssig und/oder formschlüssig verbunden ist und der Abdeckungsteilbereich (11.4.1a) zumindest einen Verbindungsbereich (VB) der Halterung (10.2) mit der Oberschiene (4) oberhalb der Oberschiene (4) mittels der Abdeckflügel (11.4.2) abdeckt.

2. Sitzlängsversteller (2) nach Anspruch 1, wobei das Abdeckelement (11.1) zumindest einen Abdeckflügel (11.4.2) umfasst, welcher seitlich vom Abdeckungsbereich (11.4.1) angeordnet ist und einen teilweise offenen Abdeckungsteilbereich (11.4.1a) bildet.

3. Sitzlängsversteller (2) nach einem der Ansprüche 1 oder 2, wobei der Abdeckflügel (11.4.2) derart an dem Abdeckungsbereich (11.4.1) angeordnet ist, dass der Abdeckflügel (11.4.2) im montierten Zustand des Abdeckelements (11.1) an der Getriebeeinheit (8) beabstandet zu der Oberseite (4.1) der Oberschiene (4) angeordnet ist.

4. Sitzlängsversteller (2) nach einem der Ansprüche 1 bis 3, wobei der Abdeckungsteilbereich (11.4.1a) unterhalb des Abdeckflügels (11.4.2) gebildet ist.

5. Sitzlängsversteller (2) nach einem der Ansprüche 1 bis 4, wobei der Abdeckflügel (11.4.2) im Wesentlichen L-förmig oder J-förmig ausgebildet ist.

6. Sitzlängsversteller (2) nach Anspruch 1 bis 5, wobei das Abdeckelement (11.1) zumindest einen Abdecksteg (11.6) und zwei vom Abdecksteg (11.6) abstehende und sich parallel gegenüberliegende Abdeckschenkel (11.4) umfasst, wobei ein zwischen den Abdeckschenkeln (11.4) vorhandener Freiraum den zumindest einen Abdeckungsbereich (11.4.1) bildet.

7. Sitzlängsversteller (2) nach einem der Ansprüche 1 bis 6, wobei der Abdeckungsbereich (11.4.1) zumindest eine mit einer Form des Gehäuseabschnitts (8.1.1) des Getriebegehäuses (8.1) korrespondierende Form aufweist.

8. Sitzlängsversteller (2) nach einem der Ansprüche 1 bis 7, wobei das Abdeckelement (11.1) im Wesentlichen omegaförmig ausgebildet ist.

9. Sitzlängsversteller (2) nach einem der Ansprüche 1 bis 8, wobei die Halterung (10.2) mit dem Getriebegehäuse (8.1) in einem durch das Schienenpaar (P1, P2) gebildeten Innenraum (I) angeordnet ist und an der Oberschiene (4) befestigt ist.

10. Sitzlängsversteller (2) nach einem der Ansprüche 1 bis 9, wobei die Halterung (10.2) zumindest ein Verbindungselement (10.1) umfasst, welches durch eine in der Oberschiene (4) gebildete Durchgangsöffnung (4.3) hinausragt und die Halterung (10.2) an der Oberschiene (4) befestigt.

11. Sitzlängsversteller (2) nach einem der Ansprüche 1 bis 10, wobei das Abdeckelement (11.1) mit einem Querträger (5) zur Halterung der Antriebseinheit (6) an dem Schienenpaar (P1, P2) verbunden ist.

12. Sitzlängsversteller (2) nach Anspruch 11, wobei das Abdeckelement (11.1) und der Querträger (5) einteilig ausgebildet sind.

13. Sitzlängsversteller (2) nach einem der Ansprüche 1 bis 12, wobei der jeweilige Abdeckschenkel (11.4) zumindest eine nach innen in den Abdeckungsbereich (11.4.1) gerichtete Wölbung (11.4.3) zur kraftschlüssigen und/oder formschlüssigen Verbindung mit dem Gehäuseabschnitt (8.1.1) umfasst.

14. Sitzlängsversteller (2) nach Anspruch 13, wobei der Gehäuseabschnitt (8.1.1) eine mit der jeweiligen Wölbung (11.4.3) korrespondierende Form, insbesondere Ausnehmung, aufweist.

15. Fahrzeugsitz (1), insbesondere Kraftfahrzeugsitz, aufweisend einen Sitzlängsversteller (2) gemäß einem der Ansprüche 1 bis 14.

## Claims

1. Longitudinal seat adjuster (2) for a seat, in particular a vehicle seat (1), comprising at least
- a rail pair (P1, P2) having a lower rail (3) and an upper rail (4) which is displaceably mounted on the lower rail (3),
- a drive unit (6),
- a transmission unit (8) having a transmission housing (8.1), wherein the transmission unit (8) and the drive unit (6) are coupled to each other,
- a holder (10.2) for fastening the transmission housing (8.1) to the upper rail (4), and
- a covering element (11.1),
wherein the upper rail (4) has at least one through-opening (4.2), through which at least one housing portion (8.1.1) of the transmission housing (8.1) projects, and
the covering element (11.1) for covering the transmission housing (8.1) comprises at least one covering region (11.4.1), which is formed by two covering legs (11.4) arranged opposite each other in parallel, and
the covering element (11.1) comprises at least one covering sub-region (11.4.1a) arranged laterally with respect to the covering region (11.4.1), wherein the covering sub-region (11.4.1a) is defined by means of a covering wing (11.4.2) which projects perpendicularly in a longitudinal direction from one of the covering legs (11.4),
wherein the covering region (11.4.1) is connected to the housing portion (8.1.1) in a force-fitting and/or form-fitting manner, and the covering sub-region (11.4.1a) covers at least one connection region (VB) of the holder (10.2) with the upper rail (4) above the upper rail (4) by means of the covering wings (11.4.2).

2. Longitudinal seat adjuster (2) according to Claim 1, wherein the covering element (11.1) comprises at least one covering wing (11.4.2), which is arranged laterally from the covering region (11.4.1) and forms a partially open covering sub-region (11.4.1a).

3. Longitudinal seat adjuster (2) according to either of Claims 1 and 2, wherein the covering wing (11.4.2) is arranged on the covering region (11.4.1) in such a way that the covering wing (11.4.2) is arranged spaced apart from the upper side (4.1) of the upper rail (4) when the covering element (11.1) is in the state mounted on the transmission unit (8).

4. Longitudinal seat adjuster (2) according to one of Claims 1 to 3, wherein the covering sub-region (11.4.1a) is formed under the covering wing (11.4.2).

5. Longitudinal seat adjuster (2) according to one of Claims 1 to 4, wherein the covering wing (11.4.2) is substantially L-shaped or J-shaped.

6. Longitudinal seat adjuster (2) according to Claims 1 to 5, wherein the covering element (11.1) comprises at least one covering web (11.6) and two covering legs (11.4) which project from the covering web (11.6) and are opposite each other in parallel, wherein a free space present between the covering legs (11.4) forms the at least one covering region (11.4.1) .

7. Longitudinal seat adjuster (2) according to one of Claims 1 to 6, wherein the covering region (11.4.1) has at least one form corresponding to a form of the housing portion (8.1.1) of the transmission housing (8.1) .

8. Longitudinal seat adjuster (2) according to one of Claims 1 to 7, wherein the covering element (11.1) is substantially omega-shaped.

9. Longitudinal seat adjuster (2) according to one of Claims 1 to 8, wherein the holder (10.2) is arranged with the transmission housing (8.1) in an inner space (I) formed by the rail pair (P1, P2) and is fastened to the upper rail (4).

10. Longitudinal seat adjuster (2) according to one of Claims 1 to 9, wherein the holder (10.2) comprises at least one connection element (10.1), which projects through a through-opening (4.3) formed in the upper rail (4) and which fastens the holder (10.2) to the upper rail (4).

11. Longitudinal seat adjuster (2) according to one of Claims 1 to 10, wherein the covering element (11.1) is connected to a transverse carrier (5) for retaining the drive unit (6) on the rail pair (P1, P2) .

12. Longitudinal seat adjuster (2) according to Claim 11, wherein the covering element (11.1) and the transverse carrier (5) are constructed in one piece.

13. Longitudinal seat adjuster (2) according to one of Claims 1 to 12, wherein the respective covering leg (11.4) comprises at least one bulbous portion (11.4.3) which is directed inwardly into the covering region (11.4.1) for force-fit and/or form-fit connection to the housing portion (8.1.1).

14. Longitudinal seat adjuster (2) according to Claim 13, wherein the housing portion (8.1.1) has a form, in particular a recess, corresponding to the respective bulbous portion (11.4.3).

15. Vehicle seat (1), in particular a motor vehicle seat, having a longitudinal seat adjuster (2) according to one of Claims 1 to 14.

## Revendications

1. Dispositif de réglage de la longueur du siège (2) pour un siège, notamment un siège de véhicule (1), comprenant au moins
- une paire de rails (P1, P2) avec un rail inférieur (3) et un rail supérieur (4) monté de manière coulissante sur le rail inférieur (3),
- une unité d'entraînement (6),
- une unité de transmission (8) avec un boîtier de transmission (8.1), l'unité de transmission (8) et l'unité d'entraînement (6) étant couplées l'une à l'autre,
- un support (10.2) pour fixer le boîtier de transmission (8.1) sur le rail supérieur (4), et
- un élément de recouvrement (11.1),
le rail supérieur (4) présentant au moins une ouverture de passage (4.2) à travers laquelle fait saillie au moins une section de boîtier (8.1.1) du boîtier de transmission (8.1), et
l'élément de recouvrement (11.1) comprenant au moins une zone de recouvrement (11.4.1) pour recouvrir le boîtier de transmission (8.1), qui est formée par deux branches de recouvrement (11.4) opposées parallèles, et
l'élément de recouvrement (11.1) comprenant au moins une zone partielle de recouvrement (11.4.1a) agencée latéralement par rapport à la zone de recouvrement (11.4.1), la zone partielle de recouvrement (11.4.1a) étant définie au moyen d'une ailette de recouvrement (11.4.2) faisant saillie perpendiculairement dans la direction longitudinale à partir de l'une des branches de recouvrement (11.4),
la zone de recouvrement (11.4.1) étant reliée par adhérence et/ou par complémentarité de forme à la section de boîtier (8.1.1) et la zone partielle de recouvrement (11.4.1a) recouvrant au moins une zone de liaison (VB) du support (10.2) avec le rail supérieur (4) au-dessus du rail supérieur (4) au moyen des ailettes de recouvrement (11.4.2).

2. Dispositif de réglage de la longueur du siège (2) selon la revendication 1, dans lequel l'élément de recouvrement (11.1) comprend au moins une ailette de recouvrement (11.4.2) qui est agencée latéralement par rapport à la zone de recouvrement (11.4.1) et forme une zone partielle de recouvrement (11.4.1a) partiellement ouverte.

3. Dispositif de réglage de la longueur du siège (2) selon l'une quelconque des revendications 1 ou 2, dans lequel l'ailette de recouvrement (11.4.2) est agencée sur la zone de recouvrement (11.4.1) de telle sorte que l'ailette de recouvrement (11.4.2) est agencée à l'état monté de l'élément de recouvrement (11.1) sur l'unité de transmission (8) à une distance du côté supérieur (4.1) du rail supérieur (4).

4. Dispositif de réglage de la longueur du siège (2) selon l'une quelconque des revendications 1 à 3, dans lequel la zone partielle de recouvrement (11.4.1a) est formée sous l'ailette de recouvrement (11.4.2).

5. Dispositif de réglage de la longueur du siège (2) selon l'une quelconque des revendications 1 à 4, dans lequel l'ailette de recouvrement (11.4.2) est configurée essentiellement en forme de L ou en forme de J.

6. Dispositif de réglage de la longueur du siège (2) selon les revendications 1 à 5, dans lequel l'élément de recouvrement (11.1) comprend au moins une entretoise de recouvrement (11.6) et deux branches de recouvrement (11.4) opposées parallèles et faisant saillie de l'entretoise de recouvrement (11.6), un espace libre présent entre les branches de recouvrement (11.4) formant l'au moins une zone de recouvrement (11.4.1).

7. Dispositif de réglage de la longueur du siège (2) selon l'une quelconque des revendications 1 à 6, dans lequel la zone de recouvrement (11.4.1) présente au moins une forme correspondant à une forme de la section de boîtier (8.1.1) du boîtier de transmission (8.1) .

8. Dispositif de réglage de la longueur du siège (2) selon l'une quelconque des revendications 1 à 7, dans lequel l'élément de recouvrement (11.1) est configuré essentiellement en forme d'oméga.

9. Dispositif de réglage de la longueur du siège (2) selon l'une quelconque des revendications 1 à 8, dans lequel le support (10.2) est agencé avec le boîtier de transmission (8.1) dans un espace intérieur (I) formé par la paire de rails (P1, P2) et est fixé au rail supérieur (4).

10. Dispositif de réglage de la longueur du siège (2) selon l'une quelconque des revendications 1 à 9, dans lequel le support (10.2) comprend au moins un élément de liaison (10.1) qui fait saillie à travers une ouverture de passage (4.3) formée dans le rail supérieur (4) et fixe le support (10.2) sur le rail supérieur (4).

11. Dispositif de réglage de la longueur du siège (2) selon l'une quelconque des revendications 1 à 10, dans lequel l'élément de recouvrement (11.1) est relié à une traverse (5) pour supporter l'unité d'entraînement (6) sur la paire de rails (P1, P2).

12. Dispositif de réglage de la longueur du siège (2) selon la revendication 11, dans lequel l'élément de recouvrement (11.1) et la traverse (5) sont configurés d'une seule pièce.

13. Dispositif de réglage de la longueur du siège (2) selon l'une quelconque des revendications 1 à 12, dans lequel la branche de recouvrement (11.4) respective comprend au moins un renflement (11.4.3) orienté vers l'intérieur dans la zone de recouvrement (11.4.1) pour la liaison par adhérence et/ou par complémentarité de forme avec la section de boîtier (8.1.1).

14. Dispositif de réglage de la longueur du siège (2) selon la revendication 13, dans lequel la section de boîtier (8.1.1) présente une forme, notamment un évidement, correspondant au renflement respectif (11.4.3).

15. Siège de véhicule (1), notamment siège de véhicule automobile, présentant un dispositif de réglage de la longueur du siège (2) selon l'une quelconque des revendications 1 à 14.
